Europäisches Patentamt

European Patent Office

Office européen des brevets

(19)

(11) **EP 1 521 489 A1**

(12) **EUROPEAN PATENT APPLICATION**

(43) Date of publication:
06.04.2005 Bulletin 2005/14

(51) Int Cl.$^7$: **H04Q 7/38**

(21) Application number: **03425634.7**

(22) Date of filing: **30.09.2003**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK** | (72) Inventors:<br>• **Porcari, Mirco**<br>  **29016 Cortemaggiore (IT)**<br>• **Toniatti, Tiziana**<br>  **20149 Milano (IT)** |
| (71) Applicant: **Siemens Mobile Communications**<br>**S.p.A.**<br>**20126 Milano (IT)** | (74) Representative: **Giustini, Delio**<br>**Siemens Mobile Communications S.p.A,**<br>**Palazzo Gorky**<br>**Via Monfalcone, 1**<br>**20092 Cinisello Balsamo (IT)** |

(54) **Interference based call admission control for GSM mobile networks**

(57)     The invention refers to a method of call admission control for maintaining the quality of ongoing circuit-switched and packet-switched services in wireless communication systems, e.g. GSM/GPRS (General Packet Radio Service) networks. Whenever a new call is generated in a first cell, the possible degradation of ongoing calls in second cells caused by the acceptance of the new call is estimated by the BSC based on: the measured quality of an ongoing call, the interference value measured by the ongoing call, the radio resources required by the new call and the possible grade of overlapping of the frequencies of the first and second cells. If the estimated quality of the ongoing call is degraded under a certain threshold, the ongoing call is counted as unacceptably degraded. If the percentage of unacceptably degraded calls is above a given threshold, the new call is rejected.

FIG. 6

Printed by Jouve, 75001 PARIS (FR)

**EP 1 521 489 A1**

**Description**

Field of the Invention

The present invention refers to digital wireless communication systems, and more particularly it concerns an admission control method intended to maintain the good quality of ongoing calls in such systems. The term "wireless communication system" (or mobile communication systems) refers generally to any communication system which enables wireless communication between wireless communication devices and the fixed part of the system when the user of the wireless communication device is moving within the service area of the system.

Hereinafter, we refer in particular to the GSM (Global system for mobile communications) including GPRS (General Packet Radio Serv ice), but the present invention is not limited thereto and it is also applicable to other kinds of wireless communication, e.g. based on FDMA (Frequency Division Multiple Access) techniques such as the AMPS (Advanced Mobile Phone Service) radio access.

Background of the Invention

During the last few years, we have assisted at the great success of mobile speech communications services and ETSI (European Telecommunications Standards Institute) GSM standards. Mobile phone is now the most common device and it is almost exceptional to find someone without at least one such device.

Encouraged by the big success of GSM technologies, new operators all over the world have appeared on the market investing on GSM network. As the spectrum is a limited resource, these n ew operators have stringent requirements with respect to the available spectrum and are going to provide GSM service with a low number of frequencies. In addition, they require a flexible radio network to cope with the dynamic variation of service demand.

The radio capacity will become even more a critical issue with the offer of new data packet services on mobile networks, i.e., GPRS and EGPRS (Enhanced GPRS).

Under this situation, new design approaches for the network and new control strategies for traffic acceptance are to be adopted.

More particularly, the traditional design approach consisted of the following main steps:

1) Positioning of the BTSs (Base Transceiver Stations), according to the traffic model, user density, quality of service (e.g. call blocking probability for the voice. calls) and morphological information. Based on this data, the capacity of the cells in terms of number of required transceivers (TRXs), and the radio propagation map, with the cell coverage, are evaluated.

2) Frequency a ssignment process with the allocation of specific frequencies to each cell with the aim of minimising the interference in the system. This phase assures to reach a good radio quality in the network. The number of frequencies assigned to the cell shall match the number of TRXs; in the negative, step 1 has to be repeated.

3) Network quality evaluation, where radio quality metrics - e.g. C/I (Carrier -to-Interference Ratio), FER (Frame Erasure Ratio), BER (Bit Error Rate) - is evaluated and compared with certain target reference values. This metrics is independent of the traffic load in order to guarantee the satisfaction in all traffic load situations (i.e. worst case dimensioning). The process has to be repeated in case such conditions are not met.

In a traditional GSM network designed according to the above approach, a new call, either circuit switched (CS) or packet switched (PS), is admitted into the system, if, in the selected cell, there are enough radio resources in terms of radio time slots and network resources. Even in situations of high load conditions with all the res ources assigned, the good frequency assignment guarantees predefined target radio quality in terms of minimum C/I to provide a certain MOS (Mean Opinion Score).

In non -conventional and new GSM networks, the design approach dramatically changes due to the narrow frequency spectrum available for new operators and the high concentration of sites, the wider range of available services, the requirement of a flexible wireless communication system to cope with the dynamically changing user demands and the adoptio n of features increasing capacity, such as frequency hopping (FH), Power Control (PC) or discontinuous transmission (DTX). While step 1 keeps unchanged, step 2 has to be adapted to include tight frequency reuses (in case of 1x1 reuse, the frequency assignment is trivial because the whole spectrum is assigned to all cells), and MAIO (Mobile Allocation Index Offset) planning for frequency hopping. Furthermore, step 3 takes into account the traffic load in the evaluation of the quality metrics, thus working not in the worst case scenario but in the one foreseen by the operator.

Note that these considerations do not include the BCCH (Broadcast Control Channel) TRX planning, which TRX always works at full power and always transmits, possibly dummy bursts. For this TRX the traditional approach should still be used.

With the new approach in which the quality targets depend on the expected traffic, in case the effective traffic load in certain cells becomes higher than the expected (e.g. due to statistical fluctuations, overload conditions, unforeseen unbalanced user distribution in the cells of the GSM network), the quality target criteria may no longer be satisfied: the arrival of new calls could decrease dramatically the quality of radio transmissions causing poor quality for speech (or generally circuit -switched) calls, call dropping and reduction of the throughput for packet - switched services.

No solution to this problem exists yet.

The object of the invention is just to provide a call admission control method t hat prevents radio system degradation in the above situations.

**Summary of the invention**

The invention provides an advanced method of call admission control whereby new incoming calls are rejected when they would compromise the good quality of already established calls and increase the interference in the GSM network over a certain limit. In other words, the invention prevents the radio link and the ongoing calls from surviving under unacceptable radio link quality, or even be dropped, by not accepting new t raffic load into the wireless communication system.

The method of the invention comprises the following steps:

a) assigning a quality index to each active call and setting a first quality index threshold representative of a minimum admitted quality of the calls;

b) identifying, for each incoming call, cells with ongoing calls that could be affected by the admission of that incoming call;

c) identifying, for each cell identified at step b), calls whose quality could be affected by said incoming call;

d) evaluating, for each call identified at step c), a predicted quality index in case of admission of the incoming call;

e) comparing said predicted quality index with said first threshold;

f) counting at least the number of identified ongoing calls for which said predicted quality index is lower than said first threshold; and

g) admitting or rejecting the incoming call depending at least on the number counted at step f).

According to the invention, if the call is not admitted, other feature such as direct retry to other cells, or handover to other frequency band can be applied.

The invention also concerns a wireless communication system in which control means controlling the base stations perform the above admission control method.

Brief Description of the Drawing

The invention, together with further objects and advantages thereof, will be better understood with reference to the following description, taken in conjunction with the accompanying drawings, in which:

- FIG. 1 depicts the sample scenario used to explain the method of the invention;
- FIG. 2 is a simplified partial block diagram of the network shown in FIG. 1;
- FIG. 3 represents a portion of the interference matrix for the network shown in FIG. 1;
- FIG. 4 shows an example of call classification in a cell according to quality thresholds;
- FIG. 5 shows an example of call classification in a cell according to the RxQUAL and C/I quality scales; and
- FIG. 6 is a flow chart of the method of the invention. Detailed description of the preferred embodiment of the invention

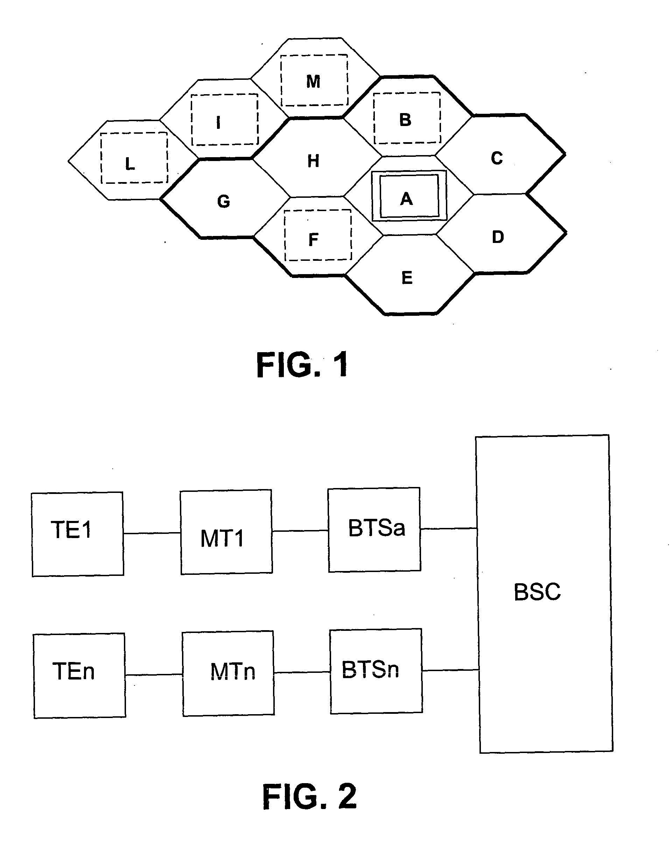

Before describing in detail the method of the invention, the scenario in which it is applied and the principles on which it is based will be disclosed with reference to FIGS. 1 to 5.

Fig. 1 shows part of a wireless communication network, comprising cells A to M that, for sake of simplicity, are assumed to be controlled by a same base station controller (BSC). The network is for instance a GSM network that is planned according to the new approach outlined above and that can accommodate both circuit -switched and packet switched communications, the latter conforming for instance to the (E)GPRS standards. Thus, as shown in Fig. 2, the users of the system will be in the most general case equipped w ith a data terminal TE1...TEn and a mobile terminal MT1 ... MTn capable of transmitting data packets. Of course, some users could be equipped only with a mobile phone. BTSa...BTSm are the base transceiver stations of cells A ... M respectively, and BSC is the common base station controller. BSC is also entrusted with the admission control according to the invention, possibly through a dialogue with the base stations. The remaining part of the system is not of interest for the understanding of the invention and therefore it has not been shown in Fig. 2.

The following assumptions are also made:

1. frequency hopping is enabled for all TRXs except the BCCH one; the frequency reuse for such traffic channel (TCH) TRXs is 1x1, that is all hopping TRXs hop on all the hopping frequencies; thus we can dispense with considering the frequency assignment in the selection of the effective interferers from the potential interferers list;
2. the proposed method applies for the allocation of incoming calls on hopping TCH TRX s, that is the allocation on BCCH TRX is not considered in the following, for the reasons mentioned above;
3. an interference matrix, that is a list of all potential victim-interferer cell pairs, is available; the matrix is possibly built in the network planning phase.

With reference to said first assumption, while a particular embodiment of the invention has been shown and described with 1 x 1, it should be understood that the present invention is not limited thereto since other emebodiments may be made by those skilled in the art (e.g. 1 x 3) without departing from the ambit of the invention..

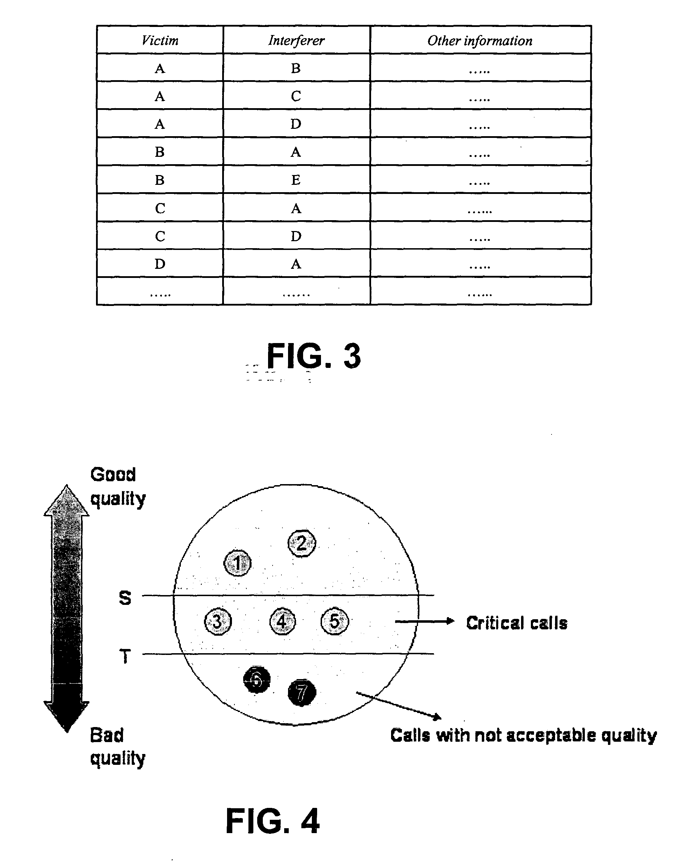

FIG. 3 displays a portion of a typical interference matrix referred to the network depicted in Fig. 1: the interference matrix is structured in rows, where each row contains a potential victim -interferer cell pair and some additional information relative to such a pair (e.g. the mean C/I, the affected area, the histogram for measured interference values). As it will become apparent from the following description, the method is only concerned with finding the cells potentially interfered by the cell with a new call (hereinafter referred to as incoming call), and the additional data are not exploited. That is why they are not expressly indicated in the Figure.

The main purpose of the method is to prevent that already established calls experience an unacceptable quality, due to the assignment of radio resources to an incoming call. It is therefore necessary to take into consideration the quality metrics and to introduce a quality threshold T (specified by the operator) under which the active calls never should fall. More sophisticated algorithms could require the introduction of several threshold values, T, related to the actual value of measured quality.

Considering for t he moment speech communications (or generally circuit -switched communications), as quality metrics for non -AMR (Adaptive MultiRate) connections we choose the received signal quality (RxQUAL) scale (ranging from 0, the best quality index, to 7, the worst qu ality index), already in use in the measurement reporting by mobile stations and BTSs. For AMR communications, the C/I value (ranging from 0 dB, the worst quality value, to 30 dB, the best quality value) is chosen instead.

We introduce also the concept of "critical calls", i. e. calls whose quality index is better than threshold T but is approaching it. Therefore a second quality threshold S is also be introduced. Also threshold S is specified by the operator.

Thus, for non AMR calls, the quality threshold values, S and T, have to be set according the following relation: $7 > T > S \geq 0$, whereas for AMR calls they have to be set according the following relation: $0 < T < S \leq 30$. The critical calls are those with quality index in the range [T, S].

Threshold T could be for example RxQUAL = 5 (this implies that the maximum accepted Bit Error Rate is 6.4%), for a non-AMR connection, and C/I = 6 dB for AMR connections. Threshold S could be for example RxQUAL = 4 or C/I = 8 dB, respectively. With such a setting, critical calls are those whose latest reported RxQUAL value is either 4 or 5 (BER between 1.6% and 6.4%), or calls with C/I ranging between 6 dB and 8 dB, respectively. Of course other values of T and S are possible.

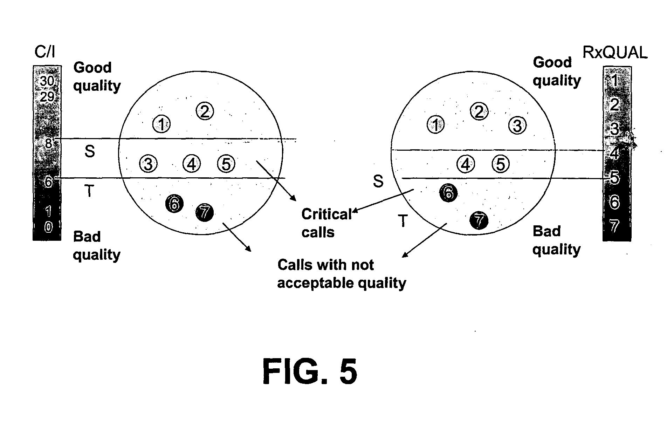

FIG. 4 shows, as an example, a qualitative classification into critical calls and calls with unacceptable quality value for a number of calls in a cell according to quality thresholds T and S. FIG. 5 shows the cl assification of the calls in the cell according to C/I and RxQUAL quality index scales with the above values of thresholds T and S.

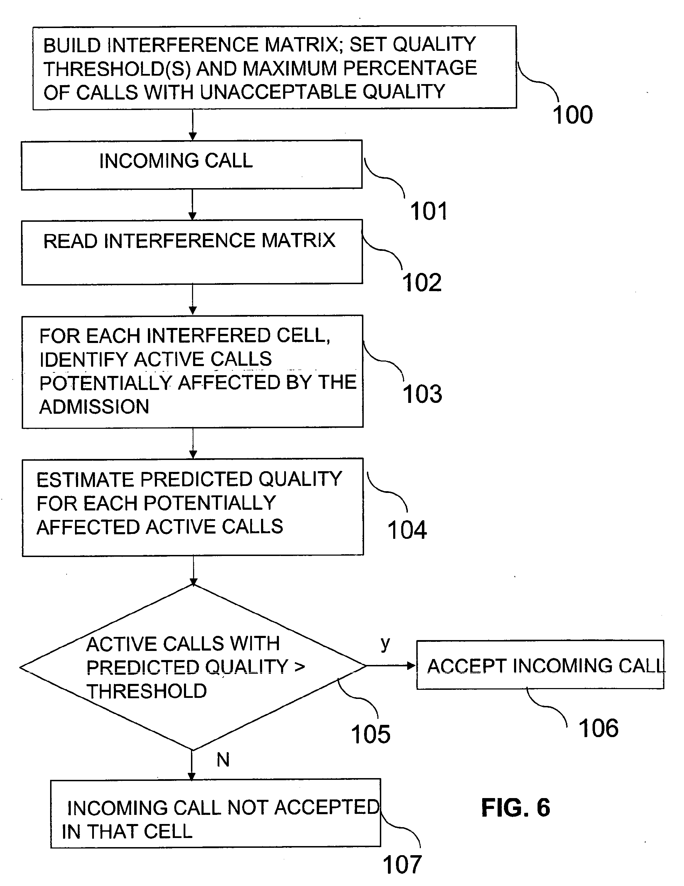

The proposed method will now be described with reference to FIG. 6.

There, step 100 is an initialisation phase (which for instance is part of the design phase), in which the interference matrix is loaded and thresholds T and S are set. Also a maximum percentage of calls with unacceptable quality is set. The method actually starts whenever a new call arrives while other calls are already ongoing, and comprises the following phases.

According to an alternative emebodiment of the invention, all the steps hereinafter disclosed are done off line.

Phase 1)

For each call attempt in a cell (step 101), the cells where calls could be affected by performance degradation are identified (step 102). This information is extracted from the interference matrix.

With reference to the network scenario depicted in FIG. 1, we will assume that there is an incoming call in cell A (highlighted by the double -line box) and that the interference matrix (see FIG. 3) states that cell A is a potential interferer for cells B to H (the region in FIG. 1 within the thick line boundary). This information can be extracted by reading the interference matrix and co nsidering the rows where the cell A is the interferer (thick line rows in FIG. 3).

Phase 2)

For each interfered cell, the active calls with power level approaching to the maximum power level admitted in the cells and with associated quality metrics value above threshold T should be considered, with the relevant quality index (step 103). This information should be known by BSC. If it is not or is too old, BSC needs to request it to the concerned BTS. Only the connections with power level approaching the maximum power level are taken into account, because, otherwise, the power control could vary the radio quality by increasing the power.

In our example, we retrieve calls in cells B - H for which the latest RxQUAL value is better than or equal to 5 (in case of non-AMR connections), or the latest reported C/I value is higher than 6 dB (in case of AMR connections).

Phase 3)

For each call identified in phase 2), assuming that the radio resources have been assigned to the incoming call, a new predicted quality metrics value is computed starting from the current values and taking into account the radio propagation conditions, the radio network structure and the type of required service (step 104). That is, the potential effect of the incoming call on the quality of the active calls is evaluated. In particular, the predicted quality indexes for non-AMR and AMR connections are derived according to relations:

$$RxQUALp_{redicted} = RxQUAL_{Measured} + \Delta_{RxQUAl} (I, RR, CS, RxQUAL_{Measured}) \qquad (1)$$

$$\frac{C}{I}\Big|_{Predicted} = \frac{C}{I}\Big|_{Measured} - \Delta_{\frac{C}{I}}(I,RR,CS) \qquad (2)$$

respectively, where

- I is the measured signal of the cell with the incoming call, reported by the active call. This value is measured on the BCCH frequency, but it serves to evaluate how the active call is interfered by that cell: for example if the active calls are faraway from the border of the cell with the incoming call, it is likely that I will be low, as well as the predicted degradation;
- RR is the number of timeslots required by the incoming call: it can range from ½ in case of Half Rate calls to more than 1 in case of HSCSD (High Speed Circuit Switched Data) or (E)GPRS calls; the higher RR is, the higher is the possible degradation;
- CS is a weighting factor to consider eventual other techniques applied for interference mitigation (e.g. MAIO planning in certain conditions for co -site cells, smart antennas or diversity techniques). In case of frequency reuses other than 1x1, this factor should also include the reduced probability of interference, thanks to the use of different frequency sets.

Instead of considering all active calls with quality above threshold T in the interfered cells, only the critical calls as defined above could be taken into account. This allows minimising the computational effort and the information exchange between BTS and BSC, and speeding up the decision for the admission of the incoming call.

Still referring to the scenario of FIG. 1 and to the exemplary settings already assumed, let's assume that among the cells interfered by A only cell H has critical calls in the latest measurement, while all cells B - G have calls with quality value without range T - S. The current (the latest reported) quality value summarises the total interference suffered by the calls, without distinguishing the contributions from the different interferers of cell H (A, B, F, I, L, M highlighted by the dashed-line box). The predicted quality value wants instead to analyse the impact that a new call in cell A would have on those critical calls.

Phase 4)

The computed predicted quality values for all considered active calls in the interfered cells are finally compared with threshold T. The decision on whether or not to admit the incoming call is taken evaluating the percentage of calls (or the number of calls) in each interfered cell for which the predicted value is worst than the defined threshold (steps 105 - 107).

In summary, we don't want that the admission of the incoming call into the network will make a certain percentage (or the number) of established calls fall below the target acceptable quality level T. We neglect in our method the active calls whose quality, for other reasons, is a lready under the threshold.

The most stringent approach is to refuse the incoming call in the cell when at least one active call exceeds the threshold; on the opposite, selecting a high percentage permits following a more relaxed approach.

Setting for exam ple to 10% the maximum percentage of calls whose quality can fall under threshold T, and assuming that cell H already has 20 critical calls, if at least three of these calls have predicted quality values below T, the incoming call will be refused.

It is to be appreciated that the method of the invention does not require any change on the mobile terminal (Mobile Station - MS) side and any new message exchange between the MS and the BSS (Base Station System, i. e. base transceiver station and base station con troller) side. At most, a specific cause identifier could possibly be introduced to inform the MS initiating the call of the reason of the call rejection.

The method specified above allows maintaining a good quality for the CS calls in the mobile communica tion system, by refusing the acceptance of new CS or PS (i.e., (E)GPRS) calls when these can affect the quality of the established connections.

In a similar way, also the good quality of PS calls, which is mainly related to the throughput, can be guarante ed against high interference. For PS services the principles of the method remain the same with the following variations.

The quality index for the PS services is the BLER (Block Error Rate), ranging in interval [0,1]; hence, in each interfered cell and fo r each active PS call, the predicted BLER should be estimated starting from the current BLER measured by the BSS, i.e.

$$BLER_{Predicted} = f(I,RR,CS,BLER_{Measured}) \qquad (3)$$

where I, RR and CS have exactly the same meaning described above.

A threshold T_PS is defined which specifies a certain BLER value under which the quality of the PS call is considered unacceptable. A suitable value for T_PS could be 0.90 (90%).

The percentage of (E)GPRS active calls with acceptable quality value, but est imated to-have-the quality value falling under the threshold in case of acceptance of the incoming call, is defined. The incoming call is rejected if the percentage of (E)GPRS calls predicted to become unacceptable exceeds that value.

Any optimisation proposed to speed up the processing of predicted BLER values, such as the definition of a second threshold S_PS (e.g. 0.85, i.e. 85%), in order to limit the search to critical calls, can be extended to PS calls as well.

Note that in the considered interval function $f(i,RR,CS,BLER_{Measured})$ can be a linear function.

In summary, by avoiding the acceptance of new traffic load into the system, the method of the invention allows keeping the quality of service planned by the operator in all traffic load conditions, avoiding high and unforeseen interference which could cause call drop or generalised bad quality of speech connections and low throughput for PS service.

It is clear that the above description has been given only by wa y of non limiting example and that changes and modifications are possible without departing from the scope of the invention.

Thus, we have assumed that all victim/interferer cells belong to same BSC, so that no inter -BSC communication is needed for the retrieval of the necessary information. The method can however be applied also when different BSCs are concerned: in that case, the already standardis ed RIM (RAN Information Management, where RAN is the acronym of Radio Access Network) procedure should be used.

Moreover, for the decision on the admission/rejection of the new call we have considered only the calls whose quality is affected by the possibl e admission of the new call. However, also other calls having an unacceptable quality for other reasons could be considered.

Furthermore, even if the preceding description mainly relates to a GSM system with GPRS service, the invention can be used also wit h systems with different radio access techniques, as stated above, and generally, whenever it is desired to optimise exploitation of the available resources and increase the flexibility through an interference -based admission control method.

**Claims**

1. A method of controlling admission of incoming calls in digital cellular communication systems, comprising the steps of:

a) assigning a quality index to each active call and setting a first quality index threshold representative of a minimum admitted quality of the calls;

b) identifying cells with ongoing calls that could be affected by the admission of the incoming call;

c) identifying, for each cell identified at step b), calls whose quality could be affected by said incoming call;

d) evaluating, for each call identified at step c), a predicted quality index in case of admission of the incoming call;

e) comparing said predicted quality index with said first threshold;

f) counting the number of identified ongoing calls for which said predicted qu ality index is lower than said first threshold; and

g) accepting or not the call in the cell depending on the number counted at step f).

2. A method as claimed in claim 1, wherein, for the cell identification in step b), an interference matrix is created in an initialisation phase, which matrix has a row for each possible victim-interferer cell pair.

3. A method as claimed in claim 1 or 2, wherein the calls whose quality could be affected by the admission of the incoming call are searched among t he calls with power level approaching the maximum power level.

4. A method as claimed in any preceding claim, further comprising the step of setting a second quality index threshold, representative of a quality better than said minimum admitted quality but approaching said minimum admitted quality, the calls whose quality could be affected by the admission of the incoming call being searched among calls whose quality index lies between said first and second thresholds.

5. A method as claimed in any preceding claim, wherein different quality indexes, with respective first and second quality index thresholds, are assigned to calls related to different services.

6. A method as claimed in claim 5, wherein said quality index is the carrier -to-interference ratio C /I for adaptive multirate (AMR) speech communications, the received signal quality RxQUAL for non -AMR circuit switched calls, or the Block Error Rate (BLER) for packet switched calls.

7. A method as claimed in claim 6, wherein said predicted quality index is obtained from the latest measured quality index according to relations:

$$\left.\frac{C}{I}\right|_{Predicted} = \left.\frac{C}{I}\right|_{Measured} - \Delta_{\frac{C}{I}}(I, RR, CS)$$

$$RxQUAL_{Predicted} = RxQUAL_{Measured} + \Delta_{RxQUAL}(I, RR, CS, RxQUAL_{Measured})$$

$$BLER_{Predicted} = f(I, RR, CS, BLER_{Measured})$$

respectively, where

- I is the measured signal of the cell with the incoming call, reported by the active call;
- RR is the number of time slots required by the incoming call;
- CS is a weighting factor taking into account the application, in a system planning phase, of techniques for interference mitigation.

8. A method as claimed in claim 1 or in any of claims 2 to 7 when referred to claim 1, wherein the decision on the admission or rejection of the incoming call is taken on a per-cell basis.

9. A method as claimed in claim 8, wherein an incoming call is not accepted if a predetermined number of ongoing calls in the cell have a quality index falling below said first threshold.

10. A method as claimed in claim 8 or 9, wherein an incoming call is not accepted if the number of ongoing calls having a quality index falling below said first threshold exceeds a predetermined percentage of the potentially affected calls searched for.

**11.** A method as claimed in claim 1 or in any of claims 2 to 10 when referred to claim 1, wherein the decision on the admission or rejection of the incoming call is taken considering also calls having an unacceptable quality for reasons other than the admission of the incoming call but. that can get even worse if the incoming call is accepted.

**12.** A method as claimed in claim 1 or in any of claims 2 to 10 when referred to claim 1, wherein said identifying step b) is performed for each incoming call.

**13.** A method as claimed in claim 1 or in any of claims 2 to 10 when referred to claim 1, wherein said identifying step b) is performed off line and the decision of admit in the cell is taken "a priori".

**14.** Mobile communication system comprising at least two cells (A...M), at least one base station (BTSa...BTSm) for receiving/transmitting radio signals from/to at least two mobile stations (TE1...TEn, MT1...MTn) and control means (BSC) associated to said at least one base station, wherein, when a first mobile station (TE1...TEn, MT1...MTn) starts a new call in a first cell served by said at least one base station (BTSa...BTSm) while a second mobile station being involved in an active call in a second cell (A...M) interfered by the first cell (A...M), said control means (BSC) is arranged to decide about the admission or the rejection of said new call by a method according to any of claims 1 to 11.

**15.** A system as claimed in claim 14, wherein said mobile stations (TE1...TEn, MT1...MTn) are arranged to set up circuit-switched and packet switched communications.

**16.** A system as claimed in claim 14 or 15, wherein said system is a system having reduced spectrum availability and high and dynamic service demand, planned so as to guarantee predetermined quality targets with foreseen traffic load conditions.

**17.** A system as claimed in claim 16, wherei n said system is a GSM system supporting the general packet radio service or the enhanced general packet radio service, and the control means include at least one base station controller (BSC).

**18.** A system as claimed in claim 16, wherein said system is a system based on a frequency division multiple access radio access technique.

FIG. 1

FIG. 2

| Victim | Interferer | Other information |
|:------:|:----------:|:-----------------:|
| A | B | ….. |
| A | C | ….. |
| A | D | ….. |
| B | A | ….. |
| B | E | ….. |
| C | A | ….... |
| C | D | ….. |
| D | A | ….. |
| ….. | ……. | ….... |

# FIG. 3

Good quality

Bad quality

S

T

Critical calls

Calls with not acceptable quality

# FIG. 4

FIG. 5

**FIG. 6**

**EP 1 521 489 A1**

**European Patent Office**

**EUROPEAN SEARCH REPORT**

Application Number

EP 03 42 5634

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 510 321 B2 (CERWALL PATRIK ET AL) 21 January 2003 (2003-01-21) * abstract * * column 1, line 46 - line 54 * * column 3, line 30 - column 4, line 13 * * column 4, line 58 - column 5, line 43 * * column 6, line 8 - line 15 * * figure 2 * --- | 1-18 | H04Q7/38 |
| X | WO 01 35692 A (ERICSSON TELEFON AB L M) 17 May 2001 (2001-05-17) * abstract * * page 6, line 25 - page 7, line 3 * * page 8, line 20 - page 9, line 5 * * page 10, line 14 - line 19 * * page 11, line 7 - line 13 * --- | 1-18 | |
| A | US 5 740 537 A (ALMGREN KNUT MAGNUS ET AL) 14 April 1998 (1998-04-14) * abstract * * column 5, line 56 - column 6, line 18 * * column 3, line 3 - line 12 * --- | 1-18 | TECHNICAL FIELDS SEARCHED (Int.Cl.7) H04Q |
| A | US 5 946 625 A (HASSAN AMER ET AL) 31 August 1999 (1999-08-31) * abstract * * column 2, line 15 - column 3, line 11 * * column 7, line 49 - column 8, line 8 * ----- | 1-18 | |

The present search report has been drawn up for all claims

| Place of search | Date of completion of the search | Examiner |
|---|---|---|
| MUNICH | 10 March 2004 | Harrysson, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 42 5634

This annex lists the patent family members relating to the patent documents cited in  the above-mentioned European search report.
The members are as contained in the European Patent Office EDP file on
The European Patent Office is in no way  liable for these particulars which are merely  given for the purpose of information.

10-03-2004

| Patent document cited in search report | | Publication date | Patent family member(s) | | Publication date |
|---|---|---|---|---|---|
| US 6510321 | B2 | 06-06-2002 | US 2002068576 A1 | | 06-06-2002 |
| | | | AU 1431000 A | | 29-05-2000 |
| | | | CN 1336088 T | | 13-02-2002 |
| | | | EP 1129597 A1 | | 05-09-2001 |
| | | | JP 2002530028 T | | 10-09-2002 |
| | | | WO 0028766 A1 | | 18-05-2000 |
| WO 0135692 | A | 17-05-2001 | AU 1427401 A | | 06-06-2001 |
| | | | GB 2373686 A ,B | | 25-09-2002 |
| | | | WO 0135692 A1 | | 17-05-2001 |
| US 5740537 | A | 14-04-1998 | AU 708583 B2 | | 05-08-1999 |
| | | | AU 1679397 A | | 22-08-1997 |
| | | | CA 2243968 A1 | | 07-08-1997 |
| | | | CN 1214845 A | | 21-04-1999 |
| | | | EP 0878108 A1 | | 18-11-1998 |
| | | | JP 2000504171 T | | 04-04-2000 |
| | | | WO 9728666 A1 | | 07-08-1997 |
| US 5946625 | A | 31-08-1999 | AU 728686 B2 | | 18-01-2001 |
| | | | AU 4665797 A | | 05-05-1998 |
| | | | BR 9712513 A | | 18-01-2000 |
| | | | CA 2268289 A1 | | 16-04-1998 |
| | | | CN 1240078 A ,B | | 29-12-1999 |
| | | | DE 69705737 D1 | | 23-08-2001 |
| | | | DE 69705737 T2 | | 23-05-2002 |
| | | | EP 0932946 A2 | | 04-08-1999 |
| | | | JP 2001502138 T | | 13-02-2001 |
| | | | WO 9816029 A2 | | 16-04-1998 |

EPO FORM P0459

For more details about this annex : see Official Journal of the European Patent Office, No. 12/82